# EUROPEAN PATENT SPECIFICATION

(11) **EP 0 713 343 B1**
(45) Date of publication and mention of the grant of the patent: **11.08.2004**
(21) Application number: 95117947.2
(22) Date of filing: 14.11.1995
(51) Int. Cl.: H04Q 7/32, H04M 1/72

(54) **Portable multi-information communication device**
Tragbares Vielfach-Nachrichtenübertragungsgerät
Dispositif de communication d'information diverses portable

(30) Priority: 15.11.1994 JP 28020294
(43) Date of publication of application: 22.05.1996
(73) Proprietor: NEC CORPORATION, Tokyo (JP)
(72) Inventor: Fujiwara, Ryuhei, Tokyo (JP)
(74) Representative: VOSSIUS & PARTNER

(56) References cited:
- EP-A- 0 585 030
- EP-A- 0 619 669
- US-A- 4 991 197

## Description

The present invention relates to a portable multi-information communication device, and in particular, to a portable multi-information communication device having a similar function to a personal computer and applicable to audio and data communications between networks. Description of the Related Art

Recently, mainly between personal computers, there is an increased need for communicating information, with an increasing frequency of data communications using a data modulator/demodulator (modem) for connection to a wired telephone line. Moreover, as a personal portable data processing device with a similar function to a personal computer (hereafter "portable data processor") hits the market, there is observed a growing need for data communications by such a wide mobile device with another or to and from a personal computer.

Also in the field of a radio telephone, a digital modulation system is employed for a radio transmission line to permit a digital data transmission to cope with a comming advent of a multi-media age. Although there might have been a potential plan for accommodating a radio section in a portable data processor, the radio telephone terminal and the portable data processor available in the market are still simply adapted to be connectable to each other via a cable or connector.

To accommodate a radio section into a portable data processor, if a radio telephone of an adaptive form to audio communications and a portable data processor with an operation section adaptive to operations while looking are simply combined in a unit, a resultant configuration should often be inconvenient for the use in either purpose. Moreover, when compared with telephones whose main functions are for communications, a portable data processor may undergo a rapid development such as of a handling of information, and hence a frequent repurchase due to abandonment of an old-fashioned. Furthermore, a radio telephone may be coupled with other devices than a portable data processor. Like this, a radio telephone and a portable data processor may well be developed as different devices for the time being. However, they need to be compact in size so that the use of a cable or connector for a connection therebetween is disadvantageous in operability and accomodation, in addition to an insufficient strength to an insertion frequency and an inappropriate reliability to aging.

The application EP-A-0 585 030 discloses such an apparatus with some limitations due to hardware. Audio data and speech data are identified by their time slot, leading to a lack of flexibility.

The use of a portable data processor varies depending on a type of data, eg. it may be for communications with a facsimile, a personal computer, or occasionally for an optical communication with an identical type of device, thus needing an adaptivity to a flexible selection of media (eg. modem, etc. ) in accordance with an opposite end.

The present invention has been achieved with such points in mind.

It is therefore an object of the present invention to provide a portable multi-information communication device for effecting transmission and reception of both audio and data signals, permitting conventional components to be employed with an increased operability and convenience.

. To achieve the object, a genus of the present invention provides a portable multi-information communication device according to claim 1 comprising a portable radio telephone section and a portable operation section each respectively for transmitting and receiving information by optical communications.

The portable radio telephone section comprises a radio transceiver part for performing radio communications with a base station of a radio telephone system or a radio data communication system, an audio input/output means for inputting and outputting audio signals to and from the radio transceiver part, a first operation part for inputting at least dial information, an informing means for informing at least an occurrence of a data reception, a first optical communication part for performing optical communications with the portable operation section, a first information storing means for storing data received by and input to the radio transceiver part, information received by the first optical communication part, and information input from the first operation part, a data processor part for processing information received from the first optical communication part and outputting the processed information to the first information storing means or to the radio transceiver part, and a first control means for effecting a control of the first information storing means or the informing means according to input information from the first operation part or a received signal from the radio transceiver part, a control for generating a predetermined code to be transmitted through the radio transceiver part, and a control for periodically monitoring stored information in the first information storing means to control the data processor part according to the stored information. The portable operation section comprises a second operation part for inputting at least the dial information or transmission data, a display for displaying information, a second optical communication part for performing optical communications with the first optical communication part, a second information storing means for storing information input from the second operation part or data received by the second optical communication part, and a second control means for effecting a control of the second information storing means or the display according to input information from the second operation part or a received signal from the second communication part and a control for outputting stored information in the second information storing means to the second optical communication part.

According to a species of the genus of the invention, the portable radio telephone section further comprises a select means controlled by the first control means for selecting one of the audio input/output means and the data processor part to connect the same to the radio transceiver part so that the dial information input from the first operation part is tranmitted via the radio transceiver part before the first control means responds to a call transmission acceptance code received by the radio transceiver part to execute a call transmission process in which the first control means has the select means select the audio input/output means, and to a call arrival code received by the radio transceiver part to execute a call arrival process in which the first control means has the informing means inform a call arrival and the select means select the audio input/output means. This is advantageous for the radio transceiver part is concurrently operable.

According to another species of the genus of the invention, the portable operation section serves in a call transmission process to read information input from the second operation part and stored in the second information storing means, for transmitting the same from the second optical communication part, and the portable radio telephone section stores information received by the first optical communication part in the first information storing means through the data processor part and transmits a call transmission code generated by the first control means from the radio transceiver part, before responding to a call transmission acceptance code received by the radio transceiver part to transmit the information stored in the first information storing means from the radio transceiver part.

According to another species of the genus of the invention, the portable radio telephone section responds to a call arrival code received by the radio transceiver part to have the informing means inform with a distinction between an audio call arrival and a data call arrival, and further responds to the data call arrival to store received data in the first information storing means and to respond to a read request signal received from the portable operation section to read the received data stored in the first information storing means to transmit to the portable operation section.

Thus, the user can tell an audio data arrival from a data call arrival. In the data call arrival, received data can be transferred to the portable operation section.

According to another species of the genus of the invention, the first control means periodically monitors the first information storing means for information stored therein and responds to the stored information to execute transmission process. This is advantageous for the second operation part of the portable operation section is employable as a terminal of a remote operation, in place of the first operation part of the portable radio telephone section, in both cases of an audio call and a data call.

According to another species of the genus of the invention, the first optical communication part is separable from and connectable by a cable to a body of the portable radio telephone section.

According to another species of the genus of the invention, the first and the second optical communication part are replaceable by a first and a second ultrasonic communication part, respectively.

According to the present invention, a portable radio telephone section and a portable operation section are separated from each other. A two-way communication is permitted between the two sections by a first and a second optical communication part. For a call transmission, a call transmission code is transmitted from a radio transceiver part of the portable radio telephone section, and after reception of a call transmission acceptance code, an audio or data signal is read from a first information storing means to be transmitted from the radio transceiver part. On the other hand, upon an arrival of a predetermined call, data following the received call are stored in the first information storing means, before the stored data are read and transmitted to the portable operation section according to a request from the portable operation section. Upon an arrival of an audio call, a talk is permitted between an audio input/output means and an opponent. Therefore, by securing an opposite communication (interchangeability) between the first and second optical communication parts, audio and data signals can be transmitted and received.

Further, the first optical communication part of the portable radio telephone section is separable from and connectable by a cable to a body of the portable radio telephone section so that the body of the portable radio telephone section is accommodatable in a place where light is interceptable.

The objects, features and advantages of the present invention will become more apparent from consideration of the following detailed description, taken in conjunction with the accompanying drawings, in which:
Fig. 1 is a block diagram of a portable multi-information communication device according to an embodiment of the present invention;
Fig. 2 is a flow chart for describing actions in a call transmission process of a portable radio telephone section of the portable multi-information communication device of Fig. 1;
Fig. 3 is a plan view of an example of an operation unit of the portable radio telephone section;
Fig. 4 is a diagram for describing a transmission/rec eption code from a CPU;
Fig. 5 is a flow chart for describing actions in a call arrival process of the portable radio telephone section;
Fig. 6 is a flow chart for describing actions upon a data call arrival:
Fig. 7 is a flow chart for describing actions in a call transmission process of a portable radio operation section of the portable multi-information communication device of Fig. 1;
Fig. 8 is a diagram showing exemplary information stored in a dual port RAM;
Fig. 9 is a diagram showing exemplary information stored in a memory; and
Fig. 10 is a plan view of an example of an operation unit.

There will be detailed below a preferred embodiment of the present invention, with reference to the drawings. Like members are designated by like reference characters.

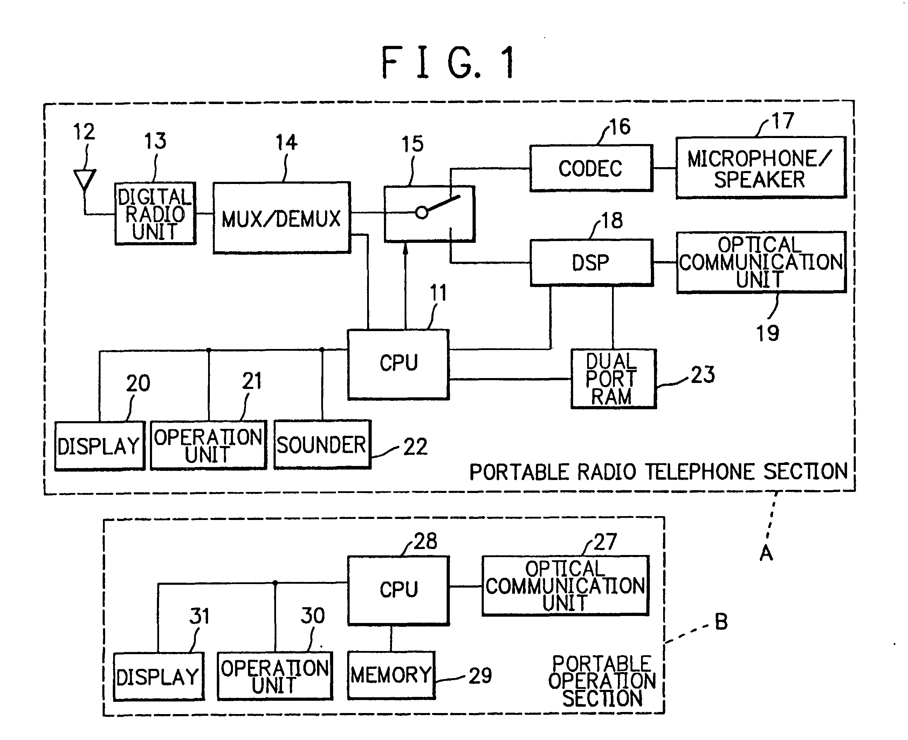

Fig. 1 shows a block diagram of an embodiment of the present invention. As shown in Fig. 1, a portable multi-information communication device of the embodiment is composed of a portable radio telephone section A and a portable operation section B.

The portable radio telephone section A comprises a central processing unit (CPU) 11, an antenna 12, a digital radio unit (TRX) 13, a multiplexer/demultiplexer unit (MUX/DEMUX) 14, a switching circuit 15, a CODEC 16, a combination 17 of microphone and a receiver, a digital signal processor (DSP) 18, an optical communication unit 19. a display 20, an operation unit 21, a sounder 22, and a dual-port random access memory (RAM) 23.

The CPU 11 controls operations of the switching circuit 15, the DSP 18, the sounder 22, the dual port RAM 23, and others. It inputs various data from the operation unit 21 and commands the display 20 to display various data. The switching circuit 15, controlled by the CPU 11, selects either the CODEC 16 or the DSP 18 as a circuit section to be connected to the MUX/DEMUX 14. In the dual port RAM 23, received (incoming) data and the like are stored to be read.

The portable operation section B comprises an optical communication unit 27, a central processing unit (CPU) 28, a memory 29, an operation unit 30, and a display 31. The optical communication unit 27 performs optical communications with the portable radio telephone section A, i.e., with the optical communication unit 19 therein. The CPU 28 conducts transmission and reception of data to and from the optical communication unit 27. It inputs various data from the operation unit 30 and commands the display 31 to display various data. In the memory 29, messages input from the operation unit 30 are stored through the CPU 28.

Description will be made of operations of the embodiment, by three selectable manners of use:
(1) using the portable radio telephone section A alone as a portable telephone;
(2) using the portable radio telephone section A for data transmission/reception; and
(3) using the portable operation section B as a data base of the portable radio telephone section A and as a terminal of a remote control.

First, the use of the portable radio telephone section A as a portble telephone is described.

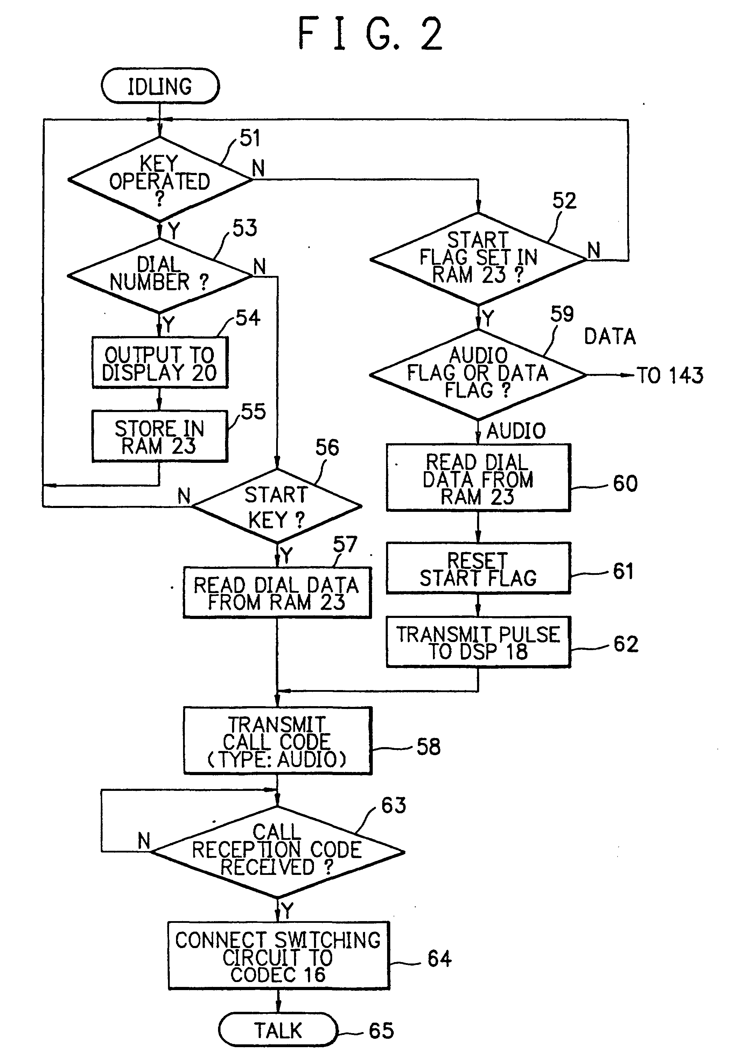

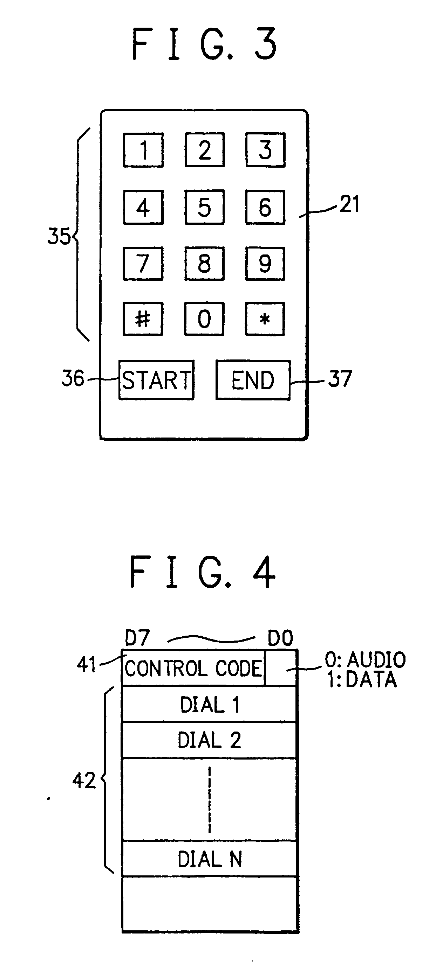

When transmitting a call, the CPU 11 of the portable radio telephone section A performs an operation according to the flow chart of Fig. 2. That is, when the operation unit 21 of the portable radio telephone section A is controlled by a user, the CPU 11 determines whether any key is operated and, if no key is operated, the CPU checks if a start flag is set in the dual port RAM 23 (steps 51, 52). As shown in Fig. 3, the operation unit 21 comprises a set of ten-keys 35, a start key 36, an end key 37, and the like.

When a dial number is input from the ten-keys 35, the CPU 11 displays the input dial number on the display 20 (steps 53, 54), and stores the dial number in the dual port RAM 23 (step 55). As a memory for storing the dial number, besides the dual port RAM 23, a RAM connected to the CPU 11 can also be used, although not shown in Fig. 1. The CPU 11 responds to an operation of the start key 36 of the operation unit 21 to read the dial number stored in the dual port RAM 23 (steps 56, 57), and to input a call transmission code including dial information to the MUX/DEMUX 14 (step 58).

Those data which the CPU transmits and receives here, for example, as shown in Fig. 4, include a code 41 composed of a 7-bit control code and a 1-bit type code representative of an audio or a data signal, and a dial data 42. The call code is an 8-bit code in which the code 41 is composed of a 7-bit control code of "0000001" and a 1-bit type code of "0" indicating an audio. Other than this, the control code may be a call transmission acceptance code "0000010," a call arrival control code "0000101," or a call arrival response control code "0000110."

The call code and the dial data input to the MUX/DEMUX 14 are radio transmitted to a base station (not shown) through the digital radio section 13 and the antenna 12. The radio telephone system calls up the call destination from the dial data received, and when there is a response (off-hook), a code indicating a call transmission acceptance and a control signal for designated call channel data are transmitted.

Therefore, among the signals from the base station received and demodulated at the antenna 12 and the digital radio unit 13, the CPU 11 analyzes the control signal input after a separation at the MUX/DEMUX 14. If the signal is a call transmission acceptance code, the connection of the switching circuit 15 is switched to the CODEC 16 side (steps 63. 64).

By this switching, a speech of the user of the portable radio telephone section A input to the microphone/receiver 17 is converted into an electrical audio signal at the microphone/receiver 17 and then converted and coded into a digital signal by the CODEC 16. Further, the signal is supplied to the MUX/DEMUX 14 through the switching circuit 15 to be regulated to a predetermined signal form. Then, the signal is modulated at the digital radio unit 13 and converted within a transmission signal frequency band to be radio transmitted from the antenna 12.

Opposite from above, an audio signal from a destination is input through the antenna 12, the digital radio unit 13, the MUX/DEMUX 14, the switching circuit 15 and the CODEC 16 to the microphone/receiver 17, and undergoes an electric-to-sound conversion to be output as a sound. Therefore, after the switching circuit 15 is switched and connected to the CODEC 16 side, a talk with an opponent is permitted (step 65).

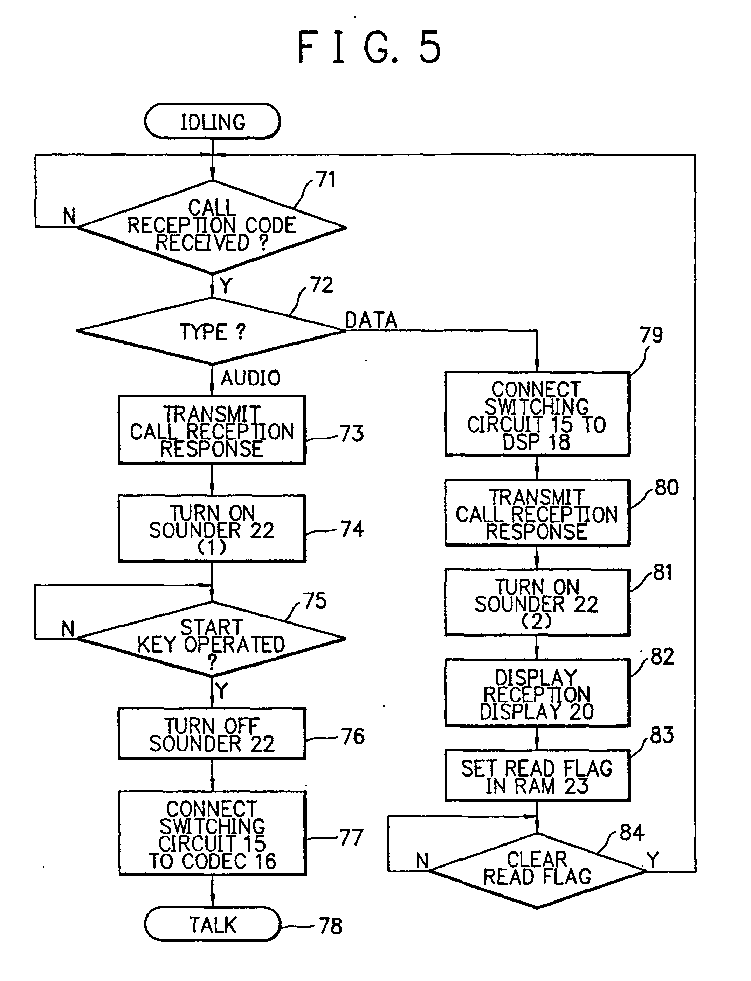

Next, the operation of the portable radio telephone section A upon a call arrival is described with reference to a flow chart of Fig. 5. At a call arrival, a base station (not shown) transmits a call arrival code together with a designated call channel data. Therefore, the CPU 11 of the portable radio telephone section A analyzes a control signal input from the MUX/DEMUX 14 to check if a call arrival code designated to the own station has been received (step 71).

As described with Fig. 4, the call arrival code is composed of a 7-bit call arrival control code of "0000101" and a 1-bit type identification code. After confirming that a call arrival code for the own station has been input, the CPU 11 determines whether the type identification code is "0" (audio) or "1" (data) (step 72). If it is determined to be an audio, the CPU 11 generates a call arrival response code composed of a 7-bit call arrival response control code and a 1-bit type identification data and transmits the code to the MUX/DEMUX 14 (step 73). The operation when the CPU 11 identifies the type identification code is a data at the step 72 will be described later.

The call arrival response code input to the MUX/DEMUX 14 is radio transmitted to the base station through the digital radio unit 13 and the antenna 12. Further, after transmitting the call arrival response code, the CPU 11 turns on the sounder 22 and let it sound and vibrate in a first mode (step 74). The first mode here, for example, is the operation of the sounder 22 repeated to be turned on for 1 second and then turned off for 2 seconds without stopping.

Therefore, the user is informed of an occurrence of a call arrival by the sounding and vibration of the sounder 22. The sounder 22 keeps sounding and vibrating intermittently until the start key 36 of the operation unit 21 is pushed. Once the start key is pushed, the sounder 22 is turned off (steps 75, 76). The CPU 11 then switches and connects the switching circuit 15 to the CODEC 16 side (step 77). By this, a talk with an opponent is permitted as in a call transmission process (step 78).

Next, the operation of the portable radio telephone section A upon a data call arrival is described with reference to a flow chart of Fig. 5. When the CPU 11 identifies a data arrival from the type identification code in the step 72, the switching circuit 15 is switched and connected to the DSP 18 side (step 79). The CPU 11 then generates a call arrival response control data and outputs the data to the MUX/DEMUX 14 (step 80). This call arrival response control data is radio transmitted to a base station (not shown) through the digital radio unit 13 and the antenna 12.

Further, the CPU 11 lets the sounder 22 sound and vibrate in a second mode (step 81). The second mode, for example, is a mode for the sounder 22 to sound and vibrate for 0.5 seconds and then stopping the sound and vibrate for 0.5 seconds and repeating this operation for 10 seconds. By this, the user of the portable multi-information communication device of the present embodiment is informed of a data call arrival. Furthermore, the CPU 11 displays an occurrence of a data call arrival on the display 20 (step 82). The CPU 11 then sets a read flag at the dual port RAM 23 (step 83), and waits until the read flag is cleared (step 84).

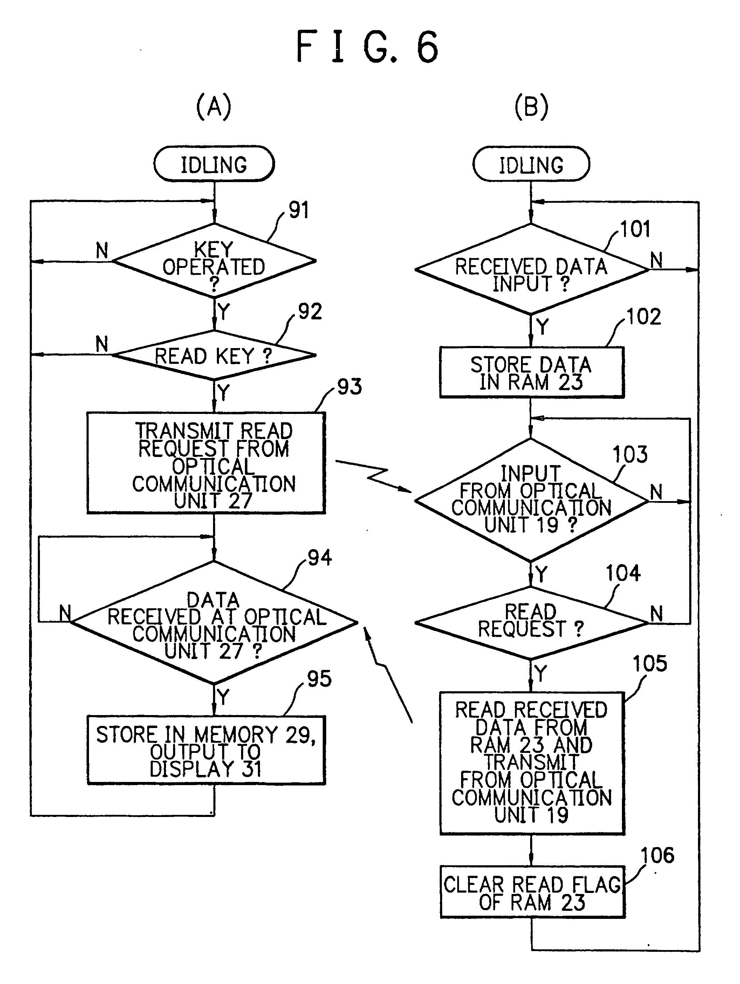

On the other hand, by switching and connecting the switching circuit 15 to the DSP 18 side in the step 79, the data received by the antenna 12 is input through the digital radio unit 13, the MUX/DEMUX 14, and the switching circuit 15 to the DSP 18. According to a flow chart shown in Fig. 6(B), after detecting the input of the received data (step 101), the DSP 18 stores the data in the dual port RAM 23 (step 102). Then, the DSP 18 waits for an input from the optical communication unit 19 (step 103).

Further, after confirming a data call arrival from the sounding and vibration of the sounder 22 or from the display 20, the user of the portable multi-information communication device controls the operation unit 30 of the portable operation section B and instructs a readout of the received data by a keying. According to a flow chart shown in Fig. 6(A), by confirming the keying, the CPU 28 in the portable operation section B generates a read request signal, and outputs the signal from the optical communication unit 27 only if the keying is for a readout instruction (steps 92, 93).

The read request signal transmitted from the optical communication unit 27 is received by the optical communication unit 19 of the portable radio telephone section A and then input to the DSP 18. According to the flow chart shown in Fig. 6(B), when the input signal is a read request signal (step 104), the DSP 18 reads the received data stored in the dual port RAM 23 at the step 102 and supplies the data to the optical communication unit 19 for transmission (step 105). Then the read flag in the dual port RAM 23 is cleared (step 106). By this, the CPU 11 is recovered to an idling state (step 84).

The received data as transmitted from the optical communication unit 19 is received by the optical communication unit 27 in the portable operation section B, and then input to the CPU 28. According to the flow chart shown in Fig. 6(A), when the input signal is a received data (step 94), the DSP 28 stores the data in the memory 29 and displays the data reception on the display 31 (step 95).

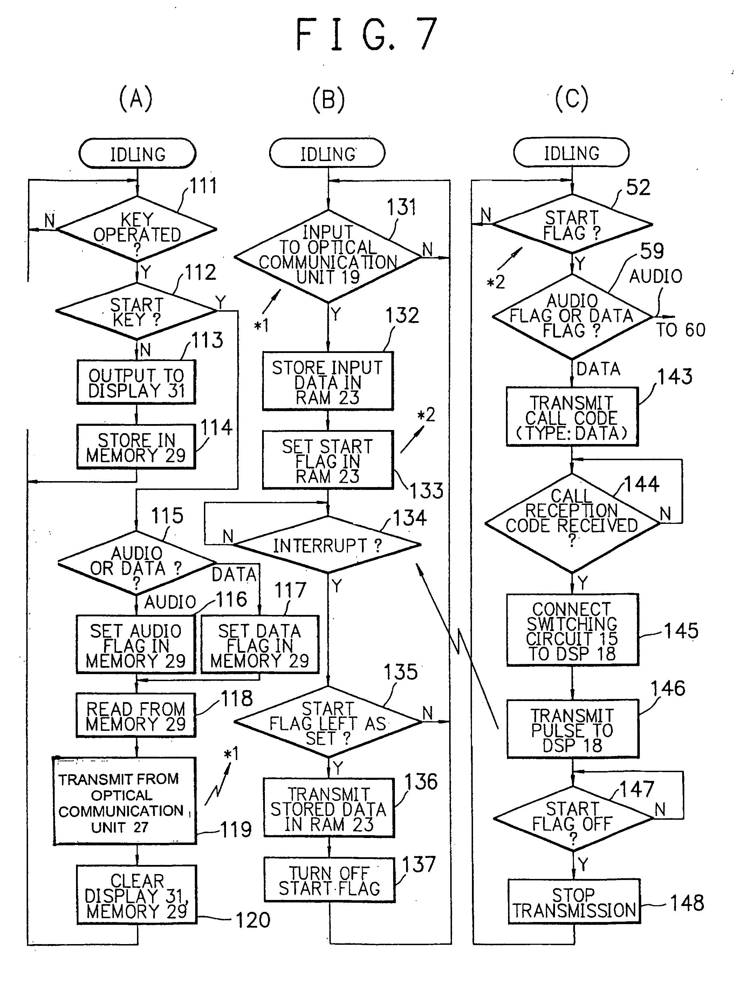

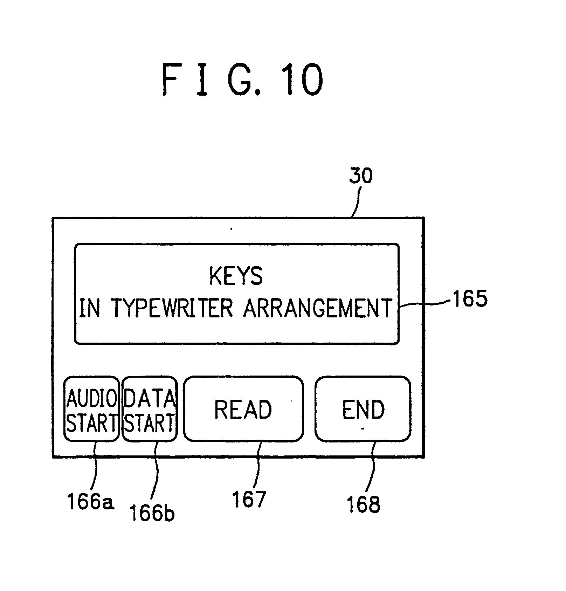

Next, a call transmission process of Fig. 1 by use of the portable operation section B is described with reference to Figs. 7 to 10. According to the flow chart shown in Fig. 7(A), the CPU 28 of the portable operation section B first checks if there is a keying from the operation unit 30 (step 111). As shown in Fig. 10, the keys of the operation unit 30 are composed of keys 165 arranged similarly to those of a typewriter, an audio start key 166a, a data start key 166b, a read key 167, and an end key 168.

When a keying is detected, the CPU 28 identifies whether the keying is by the audio start key 166a or by the data start key 166b (step 112). If it is by neither of them, it is identified as a message input by the key 165, and the input message is displayed on the display 31 (step 113) and stored in the memory 29 (step 114). Thereby, an operator of the operation unit 30 is permitted to confirm and edit the contents through the display 31.

Further, when the audio start key 166a or the data start key 166b is pressed by the operator, the CPU 28 detects this (step 112), and determines if the input is by the audio start key 166a or by the data start key 166b (step 115). If it is an audio, an audio flag is set in the memory 29 (step 116). If it is a data, a data flag is set in the memory 29 (step 117). The CPU 28 then reads the stored data and the flag from the memory 29 (step 118) and supplies them to the optical communication unit 27 for transmission (step 119).

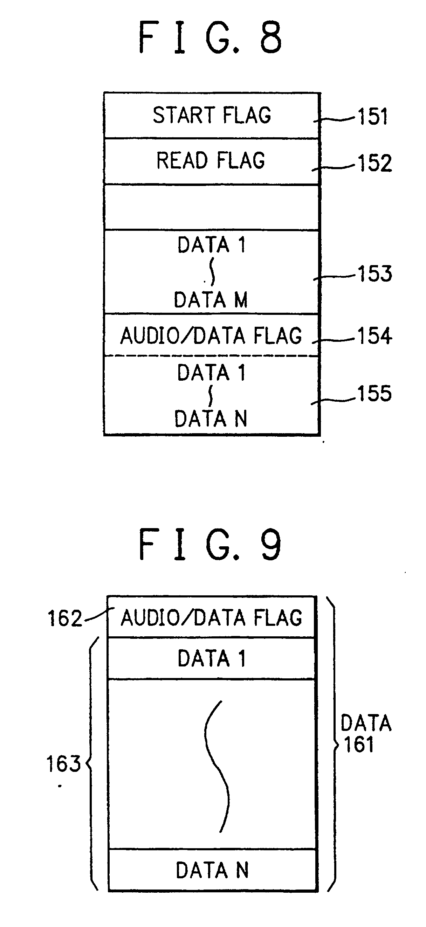

As shown in Fig. 9, the stored data in the memory 29 is composed of audio/data flags 162 and data 163. In the case of an audio flag, the data is a dial data, and in the case of a data flag, it is a received data. After transmission from the optical communication unit 27, the display 31 and the memory 29 are cleared and recovered to their original states by the CPU 28 (step 120).

The data transmitted from the optical communication unit 27 is received by the optical communication unit 19 of the portable radio telephone section A. According to a flow chart shown in Fig. 7(B), by confirming an input from the optical communication unit 19 (step 131), the DSP 18 stores the input signal 161 in the dual port RAM 23 (step 132) and sets a start flag (step 133). As shown in Fig. 8, the stored data in the dual port RAM 23 is composed of a start flag 151, a read flag 152, data 153, an audio data flag 154, and data 155. The audio data flag 154 and the data 155 correspond to the input signal 161. Further, the data 153 corresponds to the received data stored in the step 102.

According to a flow chart shown in Fig. 7(C), the CPU 11 of the portable radio telephone section A periodically checks if a start flag is written in the dual port RAM 23 or not (step 52). When a writing of a start flag is confirmed, the CPU 11 identifies whether the flag stored in the dual port RAM 23 is an audio flag or a data flag (step 59), and when it is identified to be an audio flag, the process goes to the step 60 in the flow chart shown in Fig. 2. On the other hand, when it is identified to be a data flag, a call code is generated and supplied to the MUX/DEMUX 14 (step 143). The type identification code of this call code is "data."

The call code supplied to the MUX/DEMUX 14 is radio transmitted to a base station by the antenna 12 through the digital radio section 13 after being regulated into a signal form determined by a radio data communication system. The radio data communication system calls up a destination from information of a person to communicate with, which is included in a data call processing control signal, and based on the response from the person, provides a direction for the starting of a communication by sending back a control signal in a call arrival code.

Therefore, after completion of the step 143, the CPU 11 analyzes the control signal input after being received and demodulated by the antenna 12 and the digital radio unit 13 and separated by the MUX/DEMUX 14, and checks if a call arrival code is received (step 144). When there is a reception of a call arrival code, the switching circuit 15 is switched to the DSP 18 side (step 145).

Further, the CPU 11 sets a transmission start flag in the address of the dual port RAM 23, and after inputting a pulse to the DSP 18 as an interruption signal (step 146), checks if the start flag is turned off (step 147). As shown in Fig. 7(B), by confirming the input of the interruption signal (step 134), the DSP 18 determines whether a start flag is set in the dual port RAM 23 (step 135). If the flag is set, the data transmitted from the portable operating section B and stored in the dual port RAM 23 is read and output to the MUX/DEMUX 14 as a data communication signal (step 136).

The transmitted data is regulated into a predetermined signal form at the MUX/DEMUX 14 and then transmitted to the base station of the radio data communication system through the digital radio unit 13 and the antenna 12. The DSP 18 then turns off the start flag stored in the dual port RAM 23 (step 137). As shown in Fig. 7(C), by detecting that the start flag is turned off, the CPU 11 stops its transmission procedure.

Further, the portable operation section B is permitted to operate as a data base of the portable radio telephone section A and a terminal of a remote control. That is, by storing a telephone directory previously in the memory 29 of the portable operation section B as a data base, the CPU 28, controlled by the operation unit 30, searches for a telephone number in need, and a dial data as well as a call request signal are effectively transmitted from the optical communication unit 27 to the DSP 18 through the optical communication unit 19 of the portable radio telephone section A.

That is, as described above, when the audio start key 166a or the data start key 166b of the operation unit 30 is pushed after the audio flag or the data flag and the dial data or the transmitted data are stored in the memory 29 of the portable operation section B, the data stored in the memory 29 is read and transmitted to be stored in the dual port RAM by the DSP 18, and further, a start flag is set as a call request signal (steps 111 to 119, 131 to 133).

On the other hand, as shown in the flow chart of Fig. 2 and also shown in Fig. 7(C), the CPU 11 of the portable radio telephone section A periodically checks if a start flag is written in the dual port RAM 23 (step 52). By confirming that a start flag is written, the CPU 11 identifies whether the flag within the data stored in the dual port RAM 23 is an audio flag or a data flag (step 59). If the flag is a data flag, the procedure goes to the step 143 in Fig. 7(C), and if it is an audio flag, the dial data stored in the dual port RAM 23 is read (step 60).

Further, after resetting the start flag stored in the dual port RAM 23 (step 61), the CPU 11 transmits a pulse to the DSP 18 through an interruption signal line to initialize the DSP 18 (steps 134, 135 in Fig. 7(B)), and enters a call transmission process for an audio telephone (step 58 in Fig. 2). In this way, the portable operation section B operates as a data base of the portable radio telephone section A and as a terminal of a remote control.

Supposing that an optical transmission path between the optical communication unit 19 and the optical communication unit 27 is obstructed, the microphone/receiver 17 and the optical communication unit 19 may be separated from the portable radio telephone section A, instead of fixing them inside the portable radio telephone section A, to be connected respectively to the CODEC 16 and to the DSP 18 through a cable. In that case, for example, a call and a data communication are enabled by keeping a body of the portable radio telephone section inside a pocket with the portable operating section B in hand, and the optical communication unit 18 placed at a position permitting an optical communication with the portable operating section B.

Further, the present invention is not restricted by the embodiment, but the optical communication units 19, 27 may effectively be replaced by an ultrasonic communication means, although in that case the transmitting speed of data may be reduced. Furthermore, a RAM other than the dual port RAM 23 may be used. Moreover, the content of the data transmitted between the portable operation section B and the portable radio telephone section A is optional. Therefore, although the portable radio telephone section A may be difficult to develop with an aligned infrastructure, a new kind of data processing service is permitted by replacing only the portable operation section B with a new one.

As described, according to the present invention, the portable radio telephone section and the portable operation section are separated. A two-way communication is permitted between the two sections through the first and the second optical communication unit. Therefore, by securing the interchangeability between the first and second optical communication units, the contents of the communication data between the portable radio telephone section and the portable operation section directly transmitting and receiving audio and data becomes optional. As a result, the constitution of the portable operating part is changeable according to users and data.

Usually, in accommodation of a radio unit into a portable data processor, if a radio telephone of a shape appropriate for audio communication and a portable data processor having a visual operation unit are unified as one body, the form of the body is apt to become inconvenient in use for both purposes. However, according to the present invention, this problem is prevented, and the operating quality is increased.

Further, since the portable radio telephone and the portable operation section are developable individually, the portable multi-information communication device of the present invention is permitted of communications with various devices such as a facsimile and a personal computer, not depending on the contents of the data. Therefore, an allowable range of communication is increased.

Furthermore, according to the invention, the first optical communication unit of the portable radio telephone section is connectably separated from the body of the telephone. Therefore, the body of the telephone may be placed in a location where light is obstructed. As a result, the body of the telephone is permitted to be kept inside a pocket, which eventually leads to a wide range of usage, and moreover, operation and mounting quality, strength and reliability are improved with use of cables and connectors.

Further, since received data is once stored in a first information storing means and then read by a remote control of the portable operation section for a display in an optional timing, the invention is convenient in use.

While the present invention has been described with reference to the particular illustrative embodiment, it is not to be restricted by this embodiment but only by the appended claims. It is to be appreciated that those skilled in the art can change or modify the embodiment without departing from the scope the present invention.

## Claims

1. A portable multi-information communication device for effecting transmission and reception of both audio and data signals comprising a portable radio telephone section (A) and a portable operation section (B) each respectively for transmitting and receiving information by optical communications, the portable radio telephone section (A) comprising:
a radio transceiver part (13) for performing radio communications with a base station of a radio telephone system or a radio data communication system;
an audio input/output means (16, 17) for inputting and outputting audio signals to and from the radio transceiver part (13);
a first operation part (21) for inputting at least dial information;
an informing means (20) for informing at least an occurrence of a data reception;
a first optical communication part (19) for performing optical communications with the portable operation section (B);
a first information storing means (23) for storing data received by and input to the radio transceiver part (13), information received by the first optical communication part (19), and information input from the first operation part (21), wherein the audio and data signals are identified by a flag;
a data processor part (18) for processing information received from the first optical communication part (19) and outputting the processed information to the first information storing means (23) or to the radio transceiver part (13); and
a first control means (11) for effecting a control of the first information storing means (23) or the informing means (20) according to input information from the first operation part (21) or a received signal from the radio transceiver part (13). wherein the first control means (11) identifies whether the flag stored in the first storing means (23) is a audio flag or a data flag; a control for generating a predetermined code to be transmitted through the radio transceiver part (13), and a control for periodically monitoring stored information in the first information storing means (23) to control the data processor part (18) according to the stored information,
the portable operation section (B) comprising:
a second operation part (30) for inputting at least the dial information or transmission data;
a display (31) for displaying information;
a second optical communication part (27) for performing optical communications with the first optical communication part (19);
a second information storing means (29) for storing information input from the second operation part (30) or data received by the second optical communication part (27); and
a second control means (28) for effecting a control of the second information storing means (29) or the display (31) according to input information from the second operation part (30) or a received signal from the second optical communication part (27) and a control for outputting stored information in the second information storing means (29) to the second optical communication part (27).

2. A portable multi-information communication device according to claim 1, wherein the portable radio telephone section (A) further comprises a select means (15) controlled by the first control means (11) for selecting one of the audio input/output means (16, 17) and the data processor part (18) to connect the same to the radio transceiver part (13) so that the dial information input from the first operation part (21) is tranmitted via the radio transceiver part (13) before the first control means (11) responds to a call transmission acceptance code received by the radio transceiver part (13) to execute a call transmission process in which the first control means (11) has the select means (15) select the audio input/output means (16, 17), and to a call arrival code received by the radio transceiver part (13) to execute a call arrival process in which the first control means (11) has the informing means (20) inform a call arrival and the select means (15) select the audio input/output means (16, 17).

3. A portable multi-information communication device according to claim 1 or 2, wherein the portable operation section (B) serves in a call transmission process to read information input from the second operation part (30) and stored in the second information storing means (29), for transmitting the same from the second optical communication part (27), and
wherein the portable radio telephone section (A) stores information received by the first optical communication part (19) in the first information storing means (23) through the data processor part (18) and transmits a call transmission code generated by the first control means (11) from the radio transceiver part (13), before responding to a call transmission acceptance code received by the radio transceiver part (13) to transmit the information stored in the first information storing means (23) from the radio

4. A device according to claim 1, 2 or 3,
wherein the portable radio telephone section (A) responds to a call arrival code received by the radio transceiver part (13) to have the informing means (20) informed with a distinction between an audio call arrival and a data call arrival, and further responds to the data call arrival to store received data in the first information storing means (23) and to respond to a read request signal received from the portable operation section (B) to read the received data stored in the first information storing means (23) to transmit to the portable operation section (B).

5. A device according to any one of claims 1 to 4, wherein the first control means (11) periodically monitors the first information storing means (23) for information stored therein and responds to the stored information to execute a transmission process.

6. A device according to any one of claims 1 to 5, wherein the first optical communication part (19) is separable from and connectable by a cable to a body of the portable radio telephone section (A).

7. A device according to any one of claims 1 to 6, wherein the first and the second optical communication parts (19, 27) are replaceable by a first and a second ultrasonic communication parts, respectively.

## Patentansprüche

1. Tragbares Vielfach-Nachrichtenübertragungsgerät zum Senden und Empfangen sowohl von Audio- als auch Datensignalen, das jeweils zum Senden und Empfangen von Informationen durch optische Nachrichtenübertragungen einen tragbaren Funktelefonabschnitt (A) und einen tragbaren Bedienabschnitt (B) aufweist, wobei der tragbare Funktelefonabschnitt (A) aufweist:
einen Funktransceiverteil (13) zur Durchführung von Funknachrichtenübertragungen mit einer Basisstation eines Funktelefonsystems oder eines Funkdatenübertragungssystems;
eine Audioeingabe-/Ausgabeeinrichtung (16, 17) zum Eingeben und Ausgeben von Audiosignalen an und aus dem Funktransceiverteil (13);
einen ersten Bedienteil (21) zum Eingeben von mindestens einer Wählinformation;
eine Informationseinrichtung (20), um zumindest über das Ereignis eines Datenempfangs zu informieren;
einen ersten optischen Nachrichtenübertragungsteil (19) zur Durchführung von optischen Nachrichtenübertragungen mit dem tragbaren Bedienabschnitt (B);
eine erste Informationsspeichereinrichtung (23) zum Speichern von Daten, die von dem Funktransceiverteil (13) empfangen und in ihn eingegeben wurden, von Informationen, die von dem ersten optischen Nachrichtenübertragungsteil (19) empfangen wurden, und von Informationen, die von dem ersten Bedienteil (21) eingegeben wurden, wobei die Audiound Datensignale durch einen Merker **gekennzeichnet** werden;
einen Datenverarbeitungsteil (18) zum Verarbeiten von Informationen, die von dem ersten optischen Nachrichtenübertragungsteil (19) empfangen wurden, und zum Ausgeben der verarbeiteten Informationen an die erste Informationsspeichereinrichtung (23) oder an den Funktransceiverteil (13); und
eine erste Steuerungseinrichtung (11), um eine Steuerung der ersten Informationsspeichereinrichtung (23) oder der Informationseinrichtung (20) entsprechend eingegebener Informationen von dem ersten Bedienteil (21) oder eines von dem Funktransceiverteil (13) empfangenen Signals zu bewirken, wobei die erste Steuerungseinrichtung (11) identifiziert, ob der in der ersten Speichereinrichtung (23) gespeicherte Merker ein Audiomerker oder ein Datenmerker ist; eine Steuerung zum Erzeugen eines vorbestimmten Codes, der über den Funktransceiverteil (13) gesendet werden soll, und eine Steuerung zur regelmäßigen Überwachung von in der ersten Informationsspeichereinrichtung (23) gespeicherten Informationen, um den Datenverarbeitungsteil (18) entsprechend der gespeicherten Informationen zu steuern,
wobei der tragbare Bedienabschnitt (B) aufweist:
einen zweiten Bedienteil (30) zum Eingeben von mindestens der Wählinformation oder von Übertragungsdaten;
eine Anzeige (31) zum Anzeigen von Informationen;
einen zweiten optischen Nachrichtenübertragungsteil (27) zur Durchführung optischer Nachrichtenübertragungen mit dem ersten optischen Nachrichtenübertragungsteil (19);
eine zweite Informationsspeichereinrichtung (29) zum Speichern von Informationen, die von dem zweiten Bedienteil (30) eingegeben wurden, oder von Daten, die von dem zweiten optischen Nachrichtenübertragungsteil (27) empfangen wurden; und
eine zweite Steuerungseinrichtung (28), um eine Steuerung der zweiten Informationsspeichereinrichtung (29) oder der Anzeige (31) entsprechend Informationen, die von dem zweiten Bedienteil (30) eingegeben wurden, oder eines Signals, das von dem zweiten optischen Nachrichtenübertragungsteil (27) empfangen wurde, zu bewirken, und eine Steuerung zum Ausgeben von in der zweiten Informationsspeichereinrichtung (29) gespeicherten Informationen an den zweiten optischen Nachrichtenübertragungsteil (27).

2. Tragbares Vielfach-Nachrichtenübertragungsgerät nach Anspruch 1, wobei der tragbare Funktelefonabschnitt (A) ferner aufweist: eine von der ersten Steuerungseinrichtung (11) gesteuerte Auswahleinrichtung (15), um die Audioeingabe-/Ausgabeeinrichtungen (16, 17) oder den Datenverarbeitungsteil (18) auszuwählen, um denselben mit dem Funktransceiverteil (13) zu verbinden, so daß die von dem ersten Bedienteil (21) eingegebene Wählinformation über den Funktransceiverteil (13) gesendet wird, bevor die erste Steuerungseinrichtung (11) auf einen von dem Funktransceiverteil (13) empfangenen Rufübertragungsannahmecode antwortet, um ein Rufübertragungsverfahren auszuführen, in dem die erste Steuerungseinrichtung (11) die Auswahleinrichtung (15) die Audioeingabe-/Ausgabeeinrichtung (16, 17) auswählen läßt, und auf einen von dem Funktransceiverteil (13) empfangenen Rufempfangscode antwortet, um ein Rufempfangsverfahren auszuführen, in dem die erste Steuerungseinrichtung (11) die Informationseinrichtung (20) über die Ankunft eines Rufs informieren läßt und die Auswahleinrichtung (15) die Audioeingabe-/Ausgabeeinrichtung (16, 17) auswählen läßt.

3. Tragbares Vielfach-Nachrichtenübertragungsgerät nach Anspruch 1 oder 2, wobei der tragbare Bedienabschnitt (B) in einem Rufübertragungsverfahren dazu dient, von dem zweiten Bedienteil (30) eingegebene und in der zweiten Informationsspeichereinrichtung (29) gespeicherte Informationen zu lesen, um dieselben von dem zweiten optischen Nachrichtenübertragungsteil (27) zu senden, und
wobei der tragbare Funktelefonabschnitt (A) von dem ersten optischen Nachrichtenübertragungsteil (19) empfangene Informationen durch den Datenverarbeitungsteil (18) in die erste Informationsspeichereinrichtung (23) speichert und einen von der ersten Steuerungseinrichtung (11) erzeugten Rufübertragungscode von dem Funktransceiverteil (13) sendet, bevor er auf einen von dem Funktransceiverteil (13) empfangenen Rufübertragungsannahmecode antwortet, um die in der ersten Informationsspeichereinrichtung (23) gespeicherten Informationen von dem Funktransceiverteil (13) zu senden.

4. Gerät nach Anspruch 1, 2 oder 3, wobei der tragbare Funktelefonabschnitt (A) auf einen von dem Funktransceiverteil (13) empfangenen Rufempfangscode antwortet, um die Informationseinrichtung (20) über eine Unterscheidung zwischen der Ankunft eines Audiorufs und eines Datenrufs zu informieren, und ferner auf den Datenrufempfang antwortet, indem er empfangene Daten in die erste Informationsspeichereinrichtung (23) speichert, und auf ein von dem tragbaren Bedienabschnitt (B) empfangenes Leseaufforderungssignal antwortet, indem er die in der ersten Informationsspeichereinrichtung (23) gespeicherten empfangenen Daten liest, um sie an den tragbaren Bedienabschnitt (B) zu senden.

5. Gerät nach einem der Ansprüche 1 bis 4, wobei die erste Steuerungseinrichtung (11) regelmäßig die erste Informationsspeichereinrichtung (23) bezüglich darin gespeicherter Informationen überwacht und auf die gespeicherten Informationen antwortet, um ein Übertragungsverfahren auszuführen.

6. Gerät nach einem der Ansprüche 1 bis 5, wobei der erste optische Nachrichtenübertragungsteil (19) von dem Körper des tragbaren Funktelefonabschnitts (A) trennbar und durch ein Kabel mit ihm verbindbar ist.

7. Gerät nach einem der Ansprüche 1 bis 6, wobei der erste und der zweite optische Nachrichtenübertragungsteil (19, 27) jeweils durch einen ersten und einen zweiten Ultraschallnachrichtenübertragungsteil ersetzbar sind.

## Revendications

1. Dispositif portable de communication d'informations diverses permettant d'assurer une transmission et une réception de signaux audio et de signaux de données, comprenant une section de radiotéléphone portable (A) et une section de commande portable (B), chacune étant respectivement destinée à transmettre et à recevoir des informations par des communications optiques, la section de radiotéléphone portable (A) comprenant :
une partie d'émetteur-récepteur radio (13) destinée à assurer des radiocommunications avec une station de base d'un réseau de radiotéléphonie ou d'un réseau de radiocommunications de données ;
des moyens d'entrée/sortie de signaux audio (16, 17) destinés à recevoir et délivrer des signaux audio en provenance et en direction de la partie d'émetteur-récepteur radio (13) ;
une première partie de commande (21) destinée à recevoir au moins des informations de composition de numéro d'appel ;
des moyens indicateurs (20) permettant d'indiquer au moins une occurrence d'une réception de données ;
une première partie de communications optiques (19) destinée à assurer des communications optiques avec la section de commande portable (B) ;
des premiers moyens de mémorisation d'informations (23) destinés à mémoriser des données reçues par et présentées à la partie d'émetteur-récepteur radio (13), des informations reçues par la première partie de communications optiques (19) et des informations présentées par la première partie de commande (21), dans lesquels les signaux audio et les signaux de données sont identifiés par un drapeau ;
une partie de traitement de données (18) destinée à traiter des informations reçues de la première partie de communications optiques (19) et à délivrer les informations traitées aux premiers moyens de mémorisation d'informations (23) ou à la partie d'émetteur-récepteur radio (13) ; et
des premiers moyens de commande (11) destinés à assurer une commande des premiers moyens de mémorisation d'informations (23) ou des moyens indicateurs (20) en fonction d'informations présentées par la première partie de commande (21) ou d'un signal reçu provenant de la partie d'émetteur-récepteur radio (13), dans lesquels les premiers moyens de commande (11) identifient si le drapeau mémorisé dans les premiers moyens de mémorisation (23) est un drapeau audio ou un drapeau de données, une commande permettant de générer un code prédéterminé devant être transmis par l'intermédiaire de la partie d'émetteur-récepteur radio (13), et une commande permettant de surveiller périodiquement les informations mémorisées dans les premiers moyens de mémorisation d'informations (23) afin de commander la partie de traitement de données (18) en fonction des informations mémorisées,
la section de commande portable (B) comprenant :
une seconde partie de commande (30) destinée à recevoir au moins les informations de composition ou les données de transmission ;
un afficheur (31) destiné à afficher des informations ;
une seconde partie de communications optiques (27) destinée à assurer des communications optiques avec la première partie de communications optiques (19) ;
des seconds moyens de mémorisation d'informations (29) destinés à mémoriser des informations présentées par la seconde partie de commande (30) ou des données reçues par la seconde partie de communications optiques (27) ; et
des seconds moyens de commande (28) destinés à assurer une commande des seconds moyens de mémorisation d'informations (29) ou de l'afficheur (31) en fonction d'informations présentées par la seconde partie de commande (30) ou d'un signal reçu en provenance de la seconde partie de communications optiques (27), et une commande permettant de délivrer des informations mémorisées dans les seconds moyens de mémorisation d'informations (29) à la seconde partie de communications optiques (27).

2. Dispositif de communication d'informations diverses portable selon la revendication 1, dans lequel la section de radiotéléphone portable (A) comprend en outre des moyens de sélection (15), commandés par les premiers moyens de commande (11), adaptés pour sélectionner un élément parmi les moyens d'entrée/sortie de signaux audio (16, 17) et la partie de traitement de données (18) afin de connecter cet élément à la partie d'émetteur-récepteur radio (13), de sorte que les informations de composition présentées par la première partie de commande (21) sont transmises par l'intermédiaire de la partie d'émetteur-récepteur radio (13) avant que les premiers moyens de commande (11) répondent à un code d'acceptation de transmission d'appel reçu par la partie d'émetteur-récepteur radio (13) dans le but d'exécuter un traitement de transmission d'appel dans lequel les premiers moyens de commande (11) font sélectionner par les moyens de sélection (15) les moyens d'entrée/sortie de signaux audio (16, 17), et à un code d'arrivée d'appel reçu par la partie d'émetteur-récepteur radio (13) afin d'exécuter un traitement d'arrivée d'appel dans lequel les premiers moyens de commande (11) font indiquer par les moyens indicateurs (20) une arrivée d'appel et font sélectionner par les moyens de sélection (15) les moyens d'entrée/sortie de signaux audio (16, 17).

3. Dispositif de communication d'informations diverses portable selon la revendication 1 ou 2, dans lequel la section de commande portable (B) sert, pendant un traitement de transmission d'appel, à lire des informations présentées par la seconde partie de commande (30) et mémorisées dans les seconds moyens de mémorisation d'informations (29), afin de les transmettre à partir de la seconde partie de communications optiques (27), et
dans lequel la section de radiotéléphone portable (A) mémorise des informations reçues par la première partie de communications optiques (19) dans les premiers moyens de mémorisation d'informations (23) par l'intermédiaire de la partie de traitement de données (18) et transmet un code de transmission d'appel généré par les premiers moyens de commande (11) à partir de la partie d'émetteur-récepteur radio (13), avant de répondre à un code d'acceptation de transmission d'appel reçu par la partie d'émetteur-récepteur radio (13) de façon à transmettre les informations mémorisées dans les premiers moyens de mémorisation d'informations (23) à partir de la partie d'émetteur-récepteur radio (13).

4. Dispositif selon la revendication 1, 2 ou 3, dans lequel la section de radiotéléphone portable (A) répond à un code d'arrivée d'appel reçu par la partie d'émetteur-récepteur radio (13) de manière à indiquer aux moyens indicateurs (20) une différence entre une arrivée d'appel audio et une arrivée d'appel de données, et répond en outre à l'arrivée d'appel de données de façon à mémoriser les données reçues dans les premiers moyens de mémorisation d'informations (23), et à répondre à un signal de demande de lecture reçu de la section de commande portable (B) afin de lire les données reçues mémorisées dans les premiers moyens de mémorisation d'informations (23) dans le but de les transmettre à la section de commande portable (B).

5. Dispositif selon l'une quelconque des revendications 1 à 4, dans lequel les premiers moyens de commande (11) surveillent périodiquement dans les premiers moyens de mémorisation d'informations (23) les informations mémorisées dans ceux-ci, et répondent aux informations mémorisées de façon à exécuter un traitement de transmission.

6. Dispositif selon l'une quelconque des revendications 1 à 5, dans lequel la première partie de communications optiques (19) peut être séparée d'un corps de la section de radiotéléphone portable (A) et être connectée à celui-ci par un câble.

7. Dispositif selon l'une quelconque des revendications 1 à 6, dans lequel la première et la seconde partie de communications optiques (19, 27) peuvent être remplacées par une première et une seconde partie de communications par ultrasons, respectivement.
